# EUROPÄISCHE PATENTSCHRIFT

(11) **EP 1 064 188 B1**
(45) Veröffentlichungstag und Bekanntmachung des Hinweises auf die Patenterteilung: **02.01.2002**
(21) Anmeldenummer: 99916789.3
(22) Anmeldetag: 15.03.1999
(51) Int. Cl.: B62D 29/00, B60R 13/08

(54) **HOHLPROFIL MIT INNENVERSTEIFUNG UND VERFAHREN ZUR HERSTELLUNG DIESES HOHLPROFILS**
HOLLOW PROFILE WITH INNER REINFORCEMENT AND METHOD FOR PRODUCING SAID HOLLOW PROFILE
PROFILE CREUX A RENFORCEMENT INTERIEUR ET PROCEDE PERMETTANT DE PRODUIRE CE PROFILE CREUX

(30) Priorität: 20.03.1998 DE 19812288; 07.12.1998 DE 19856255
(43) Veröffentlichungstag der Anmeldung: 03.01.2001
(73) Patentinhaber: Möller Plast GmbH, 33649 Bielefeld (DE)
(72) Erfinder: BECKMANN, Friedhelm, D-32120 Hiddenhausen (DE)
(74) Vertreter: Schirmer, Siegfried, Dipl.-Ing.
(86) Internationale Anmeldenummer: DE9900700
(87) Internationale Veröffentlichungsnummer: WO9948746

(56) Entgegenhaltungen:
- WO-A-93/05103
- US-A- 5 194 199

## Beschreibung

Die Erfindung betrifft ein Verfahren zur Herstellung eines Hohlprofils mit Innenversteifung sowie ein nach dem Verfahren hergestelltes Hohlprofil mit Innenversteifung.

Im Maschinenbau und auch besonders im Automobilbau werden gestanzte und vorgeformte Blechprofile zweischalig miteinander verschweißt. Für die sich hierdurch einstellenden Hohlprofile lassen sich ausreichende Widerstandsmomente und Biegefestigkeiten nur erzielen, indem die Blechquerschnitte entsprechend vergrößert oder die Blechwandstärke erhöht wird. Eine Vergrößerung der Querschnitte führt besonders bei Kraftfahrzeugen zu einer Veränderung der inneren oder äußeren Abmaße, und eine Erhöhung der Wandstärke zu einem nicht gewünschten Mehrgewicht. Für eine Versteifung von Hohlprofilen besteht außerdem die Möglichkeit, diese mit Rippenprofilen zu verstärken. Bei Hohlprofilen, die von innen einen Korrosionsschutz erhalten sollen, sind Rippenprofile jedoch ungeeignet, wenn eine gewünschte Schutzschicht, wie bei Automobilkarossen üblich, im Tauchverfahren erzeugt wird, da die Rippenprofile verhindern, daß das Korrosionsschutzmittel in alle Bereiche der Innenprofile gelangen oder nicht gewünschte Taschen bilden.

Aus DE 42 27 393 A1 soll eine Verringerung der Korrosionsanfälligkeit des Metalls des Hohlkörpers im Bereich des von diesem umschlossenen Raums erreicht werden.

Hierzu wird u. a. eine elektrisch leitende Schicht aus einem Opfermetall oder aus einer Folie eingelegt, wobei diese Schicht durch einen Aufschäumvorgang eines den Kern ummantelnden Materials zur Auflage auf der Innenfläche des Hohlkörpers gebracht werden soll. Aus dieser Schrift kann kein Hinweis darauf entnommen werden, wie eine zur Aufnahme von Kräften geeignete Innenversteifung bei Hohlprofilen erreichbar ist.

Das Ausschäumen von Hohlteilen zur Verbesserung der mechanischen Widerstandsfähigkeit gegen Deformation ist aus DE 196 35 734 A1 bekannt. Hierbei handelt es sich überwiegend um nahtlose oder geschweißte Rohre, die ggf. umgeformt werden können. Besondere Maßnahmen zur Verringerung der Korrsosionsanfälligkeit sind nicht aufgezeigt.

Nach der US-A-5 194 199 erfolgt ein Aufschäumen des Materials und dadurch das Ausfüllen der größenmäßig vorgegebenen Zwischenräumen durch eine Tauchlackierung. Es ergibt sich zwangsläufig, daß das warme Tauchbeschichtungsmaterial entweder an der Wandung trocknet und dann die Wärmereaktion auslöst, dann müßte aber ein großer Teil des Tauchbeschichtungsmaterials oder das gesamte Tauchbeschichtungsmaterial ausgeerdet sein), oder aktivierte Schaum muß das Tauchbeschichtungsmaterial verdrängen, was wegen des dann notwendigen Blähdrucks die Ausbildung des Schaums einschränkt und zu Fehlstellen im Schaum und somit zu einem reduzierten Übertragung der genetischen Energie führt. Außerdem besteht die Gefahr, daß zumindest ein Teil des Tauschbeschichtungsmaterials in den Schaum eindringt und in dem Materialverbund zu nicht definierten Eigenschaften führt. Wie das Tauchbeschichtungsmaterial selbst reagiert (aushärtet) bleibt offen.

Der Erfindung liegt die Aufgabe zugrunde, die Herstellung eines Hohlprofils mit einem ausgeschäumten Hohlraum derart zu verbessern, daß der Korrosionsschutz erhöht ist.

Erfindungsgemäß wird diese Aufgabe durch ein Verfahren zur Herstellung eines Hohlprofils mit Innenversteifung, insbesondere zur Verwendung bei Automobilkarossen, gelöst, bei dem ein festes Kernmaterial mit aktivierbarem Material beschichtet und unter Bildung eines definierten Hohlraums ein Außenblech angeordnet wird, wobei der Hohlraum durch den Schäumvorgang des aktivierbaren Materials voll ausgefüllt wird und das feste Kernmaterial aus einem geschäumten oder ungeschäumten metallischen Werkstoff bzw. aus einem mit Metallfasern, Kohlefasern oder Glasfasern verstärkten synthetischen Werkstoff oder durch ein Hohlprofil gebildet wird und das Profil vor dem Schäumvorgang des aktivierbaren Materials einem Korrosionstauchbad zugeführt und dabei das Korrosionsschutzmittel in alle Bereiche des Innenprofils gelangt und anschließend das Hohlprofil einem Trockenofen zugeführt wird und im Trockenofen eine Reaktion des aktivierbaren Materials ausgelöst und dadurch der definiert vorgegebene Hohlraum zwischen dem aktivierbaren Material und dem Außenblech ausgefüllt wird. In Ausgestaltung des erfindungsgemäßen Verfahrens ist die Temperatur für die Beschichtung des mit dem aktivierbaren Materials versehenen festen Kernmaterials niedriger gehalten als die Einbrenntemperatur für die Korrosionsschicht im Trockenofen.

Bei einem nach dem erfindungsgemäßen Verfahren hergestellten Hohlprofil mit Innenversteifung ist der definiert vorgegebene Hohlraum zwischen dem aktivierbaren Material und dem Außenblech durch am aktivierbaren Material angeordnete Abstandhalter gebildet. Es besteht die Möglichkeit, das Hohlprofil biegesteif auszubilden und das feste Kernmaterial nur in Teilbereichen mit dem aktivierbaren Material zu beschichten.

In Ausgestaltung der Erfindung ist das Kernmaterial und das zur Beschichtung dienende äußere Material aus einem versteifenden und/oder einem energieabsorbierenden Schaumsystem und/oder einem Akustikschaum gebildet. Hierbei kann das Kernmaterial aus einem energieabsorbierenden und das zur Beschichtung dienende äußere Material aus einem versteifenden Material und/oder einem Akustikschaum gebildet sein. Bei einer Variante kann das Kernmaterial aus einem versteifenden und das zur Beschichtung dienende äußere Material aus einem energieabsorbierenden Material und/oder einem Akustikschaum gebildet sein. Bei einer weiteren Variante ist das Kernmaterial aus einem Akustikschaum und das zur Beschichtung dienende äußere Material aus einem versteifenden und/oder einem energieabsorbierenden Material gebildet.

Erfindungsgemäß wird zunächst in einem Tauchbad das Korrosionsschutzmittel aufgebracht und nachdem das überschüssige Material entfernt worden ist, die Reaktion des Schaums im nachgeschalteten Trockenofen eingeleitet. Hierdurch besteht keine Abhängigkeit zwischen der Reaktionstemperatur der Tauchbeschichtung und der Temperatur im Trockenofen. Vielmehr kann durch die Variation von Temperatur und Durchlaufzeit des Trockenofens eine Einstellung gewählt werden, bei der zunächst das Korrosionsschutzmittel trocknet und dann die Reaktion des Schaums ausgelöst wird. Hierdurch kann sich der Schaum intensiv mit der bereits getrockneten Oberflächenschicht verbinden.

Ein Ausführungsbeispiel der Erfindung ist in der Zeichnung dargestellt und wird nachfolgend näher beschrieben. Es zeigen:
- Fig. 1: eine schematische Darstellung eines Hohlprofils vor der Ausschäumung;
- Fig. 2: wie Fig. 1, jedoch nach der Ausschäumung;
- Fig. 3: wie Fig. 1, jedoch mit festem Kernmaterial in Form eines festen Profilkörpers mit Hohlraum und

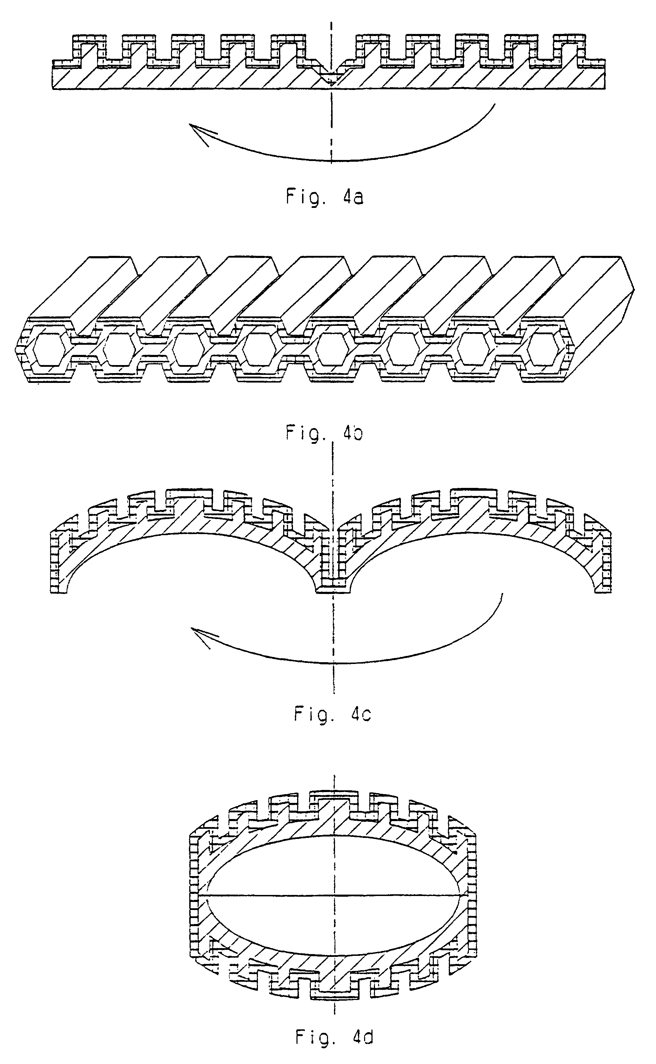

- Fig. 4a bis 4d: Varianten von Profilen mit schaumfähigem Material beschichtet.

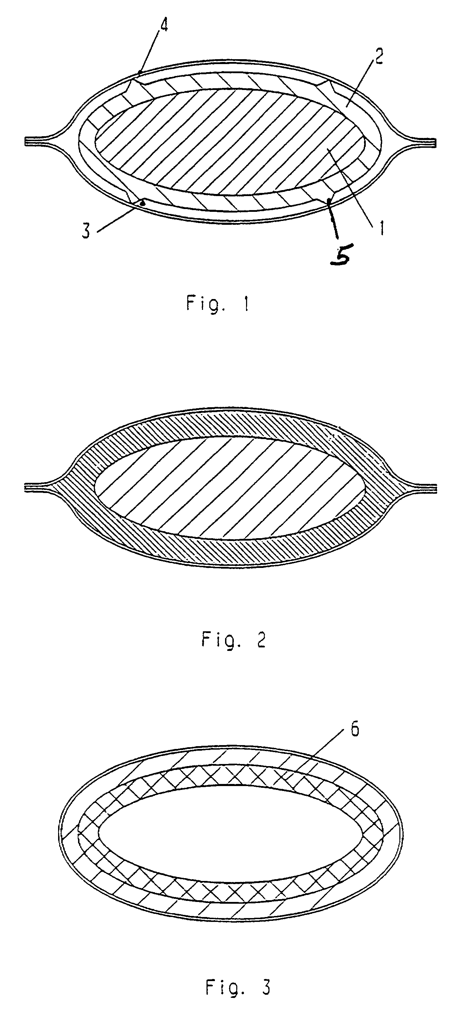

Das feste Kernmaterial 1 ist mit einem aktivierbaren Material 2 beschichtet. Unter Bildung eines Hohlraums 3 ist ein Außenblech 4 angeordnet. Der Hohlraum 3 wird durch den Schäumvorgang des aktivierbaren Materials 2 voll ausgefüllt. Je nach Anwendungsfall wird die Größe des Hohlraums 3 vorbestimmt. Hierzu finden Abstandhalter 5 Verwendung, die nach Figur 1 auf der Innenseite des Außenblechs 4 angeordnet sind. Nach Figur 3 ist das feste Kernmaterial 1 durch ein biegesteifes Hohlprofil 6 gebildet.

Vor dem Schäumvorgang wird das Hohlprofil 6 einem Korrosionsschutz-Tauchbad zugeführt. Da die Innenseite des Außenblechs 4 in diesem Zustand noch frei zugänglich ist, kann das Korrosionsschutzmittel in alle Bereiche des Innenprofils gelangen. Die Beschichtung des Kernmaterials 1 erfolgt bei einer Temperatur, die niedriger ist als die Einbrenntemperatur für die aufgebrachte Korrosionsschicht im Trockenofen. Diese höhere Temperatur im Trockenofen führt zu einer Reaktion des Beschichtungsmaterials, wodurch der Schäumvorgang ausgelöst und der gezielt gebildete Hohlraum 3 mit Schaum ausgefüllt wird.

### Aufstellung der Bezugszeichen:

- 1: Kernmaterial
- 2: aktivierbares Material
- 3: Hohlraum
- 4: Außenblech
- 5: Abstandhalter
- 6: Hohlprofil

## Patentansprüche

1. Verfahren zur Herstellung eines Hohlprofils mit Innenversteifung, insbesondere zur Verwendung bei Automobilkarossen, bei dem ein festes Kernmaterial (1) mit aktivierbarem Material (2) beschichtet und unter Bildung eines definierten Hohlraums (3) ein Außenblech (4) angeordnet wird, wobei der Hohlraum (3) durch den Schäumvorgang des aktivierbaren Materials (2) voll ausgefüllt wird und das feste Kernmaterial (1) aus einem geschäumten oder ungeschäumten metallischen Werkstoff bzw. aus einem mit Metallfasern, Kohlefasern oder Glasfasern verstärkten synthetischen Werkstoff oder durch ein Hohlprofil gebildet wird und das Profil vor dem Schäumvorgang des aktivierbaren Materials (2) einem Korrosionstauchbad zugeführt und dabei das Korrosionsschutzmittel in alle Bereiche des Innenprofils gelangt und anschließend das Hohlprofil einem Trockenofen zugeführt wird und im Trockenofen eine Reaktion des aktivierbaren Materials (2) ausgelöst und dadurch der definiert vorgegebene Hohlraum (3) zwischen dem aktivierbaren Material (2) und dem Außenblech (4) ausgefüllt wird.

2. Verfahren nach Anspruch 1, **dadurch gekennzeichnet, daß** die Temperatur für die Beschichtung des mit dem aktivierbaren Materials (2) versehenen festen Kernmaterials (1) niedriger gehalten ist als die Einbrenntemperatur für die Korrosionsschicht im Trockenofen.

3. Hohlprofil mit Innenversteifung, hergestellt nach dem Verfahren gemäß Anspruch 1 oder 2, **dadurch gekennzeichnet, daß** der definiert vorgegebene Hohlraum (3) zwischen dem aktivierbaren Material (2) und dem Außenblech (4) durch am aktivierbaren Material (2) angeordnete Abstandhalter (5) gebildet ist.

4. Hohlprofil nach Anspruch 3, **dadurch gekennzeichnet, daß** das Hohlprofil (6) biegesteif ausgebildet ist.

5. Hohlprofil nach Anspruch 3 oder 4, **dadurch gekennzeichnet, daß** das feste Kernmaterial (1) nur in Teilbereichen mit dem aktivierbaren Material (2) beschichtet ist.

6. Hohlprofil nach einem der Ansprüche 3 bis 5, **dadurch gekennzeichnet, daß** das Kernmaterial (1) und das zur Beschichtung dienende äußere Material aus einem versteifenden und/oder einem energieabsorbierenden Schaumsystem und/oder einem Akustikschaum gebildet ist.

7. Hohlprofil nach Anspruch 6, **dadurch gekennzeichnet, daß** das Kernmaterial (1) aus einem energieabsorbierenden und das zur Beschichtung dienende äußere Material aus einem versteifenden Material und/oder einem Akustikschaum gebildet ist.

8. Hohlprofil nach Anspruch 6, **dadurch gekennzeichnet, daß** das Kernmaterial (1) aus einem versteifenden und das zur Beschichtung dienende äußere Material aus einem energieabsorbierenden Material und/oder einem Akustikschaum gebildet ist.

9. Hohlprofil nach Anspruch 6, **dadurch gekennzeichnet, daß** das Kernmaterial (1) aus einem Akustikschaum und das zur Beschichtung dienende äußere Material aus einem versteifenden und/oder einem energieabsorbierenden Material gebildet ist.

## Claims

1. Method of manufacturing a hollow profile member with an internal reinforcement, particularly for use in automobile bodywork, in which a firm core material (1) is coated with an activatable material (2) and an outer metal sheet (4) is arranged with formation of a defined cavity (3), wherein the cavity (3) is completely filled by the foaming process of the activatable material (2) and the firm core material (1) is formed from a foamed or unfoamed metallic material or from a synthetic material, which is reinforced by metal fibres, carbon fibres or glass fibres, or by a hollow profile and the profile member is fed to a corrosion dipping bath before the foaming process of the activatable material (2) and in that case the anti-corrosion means passes into all regions of the inner profile member and subsequently the hollow profile member is fed to a drying oven and a reaction of the activatable material (2) is triggered in the drying oven and the defined predetermined cavity (3) between the activatable material (2) and the outer metal sheet (4) is thereby filled up.

2. Method according to claim 1, **characterised in that** the temperature for coating of the firm core material (1) provided with the activatable material (2) is kept lower than the annealing temperature for the corrosion layer in the drying oven.

3. Hollow profile member with an internal reinforcement produced in accordance with the method according to claim 1 or 2, **characterised in that** the defined predetermined cavity (3) between the activating material (2) and the outer metal sheet (4) is formed by spacers (5) arranged at the activatable material (2).

4. Hollow profile member according to claim 3, **characterised in that** the hollow profile member (6) is constructed to be stiff in bending.

5. Hollow profile member according to claim 3 or 4, **characterised in that** the firm core material (1) is coated with the activatable material (2) only in partial regions.

6. Hollow profile member according to one of claims 3 to 5, **characterised in that** the core material (1) and the outer material serving for the coating are formed from a reinforcing and/or an energy-absorbing foam system and/or an acoustic foam.

7. Hollow profile member according to claim 6, **characterised in that** the core material (1) is formed from an energy-absorbing material and the outer material serving for the coating is formed from a reinforcing material and/or an acoustic foam.

8. Hollow profile member according to claim 6, **characterised in that** the core material (1) is formed from a reinforcing material and the outer material serving for the coating is formed from an energy-absorbing material and/or an acoustic foam.

9. Hollow profile member according to claim 6, **characterised in that** the core material (1) is formed from an acoustic foam and the outer material serving for the coating is formed from a reinforcing and/or an energy-absorbing material.

## Revendications

1. Procédé pour fabriquer un profilé creux à renforcement intérieur, en particulier pour utilisation dans les carrosseries d'automobiles, selon lequel :
- un noyau (1) fait d'un matériau solide est revêtu d'un matériau activable, puis entouré d'une tôle externe (4) avec formation d'un espace creux défini (3) qui est entièrement rempli par l'opération de transformation en mousse du matériau activable (2),
- le noyau solide (1) est fait d'un matériau métallique cellulaire ou non, ou d'un matériau synthétique renforcé par des fibres métalliques, des fibres de carbone ou des fibres de verre, ou d'un profilé creux,
- le profilé creux avant la transformation en mousse du matériau activable (2) est trempé dans un bain contenant un agent de protection contre la corrosion qui atteint toutes les zones de profilé interne,
- ensuite le profilé creux est amené dans un four de séchage dans lequel est déclenchée une réaction du matériau activable (2) de sorte que l'espace creux (3) prédéfini entre le matériau activable (2) et la tôle externe (4) se trouve rempli.

2. Procédé selon la revendication 1,
**caractérisé en ce que**
la température pour effectuer le revêtement du noyau solide (1) portant le matériau activable (2) est maintenue en dessous de la température de cuisson de la couche anticorrosion dans le four de séchage.

3. Profilé creux à renforcement intérieur fabriqué par le procédé selon l'une quelconque des revendications 1 ou 2,
**caractérisé en ce que**
l'espace creux (3) prédéfini entre le matériau activable (2) et la tôle externe (4) est formé par un espaceur (5) placé sur le matériau activable (2).

4. Profilé creux selon la revendication 3,
**caractérisé en ce que**
le profilé creux (6) résiste à la flexion.

5. Profilé creux selon l'une quelconque des revendications 3 ou 4,
**caractérisé en ce que**
le noyau solide (1) n'est recouvert par le matériau activable (2) que dans des zones partielles.

6. Profilé creux selon l'une quelconque des revendications 3 à 5,
**caractérisé en ce que**
le noyau (1) et le matériau externe servant au revêtement sont constitués d'une mousse de renforcement et/ou d'un système de mousse absorbant l'énergie et/ou d'une mousse acoustique.

7. Profilé creux selon la revendication 6,
**caractérisé en ce que**
le noyau (1) est fait d'un matériau absorbant l'énergie et le matériau externe servant de revêtement est un matériau de renforcement et/ou une mousse acoustique.

8. Profilé creux selon la revendication 6.
**caractérisé en ce que**
le noyau (1) est fait d'un matériau de renforcement et le matériau externe servant de revêtement est un matériau absorbant l'énergie et/ou une mousse acoustique.

9. Profilé creux selon la revendication 6,
**caractérisé en ce que**
le noyau (1) est une mousse acoustique et le matériau externe servant de revêtement est un matériau de renforcement et/ou absorbant de l'énergie.
